Europäisches Patentamt

European Patent Office

Office européen des brevets

(19)

(11) Numéro de publication : **0 498 691 A1**

# (12) DEMANDE DE BREVET EUROPEEN

(21) Numéro de dépôt : **92400193.6**

(22) Date de dépôt : **24.01.92**

(51) Int. Cl.$^5$ : **G21F 9/30**

(30) Priorité : **06.02.91 FR 9101336**

(43) Date de publication de la demande :
**12.08.92 Bulletin 92/33**

(84) Etats contractants désignés :
**BE CH DE ES LI SE**

(71) Demandeur : **FRAMATOME**
**Tour Fiat 1, Place de la Coupole**
**F-92400 Courbevoie (FR)**

(72) Inventeur : **Guigon, Jean-Paul**
**Hameau de Varanges, 3 rue des Oiseaux**
**F-71640 Givry (FR)**
Inventeur : **Jacquier, Paul**
**37 rue des Chemins des Bruyères**
**F-69160 Tassin-La-Demi-Lune (FR)**

(74) Mandataire : **Bouget, Lucien et al**
**Cabinet Lavoix 2, Place d'Estienne d'Orves**
**F-75441 Paris Cédex 09 (FR)**

(54) **Dispositif de découpage d'un composant d'un réacteur nucléaire.**

(57) Le dispositif comporte un support (9) muni de moyens (12) pour sa fixation démontable sur la structure (1) du réacteur au-dessus et à la verticale du composant (3), une tourelle (10) montée rotative sur le support (9) autour de son axe vertical, un dispositif de reprise d'efforts (11) sur lequel l'extrémité inférieure de la tourelle (10) est montée rotative, un bras (18) monté mobile sur la tourelle (10) dans une direction radiale, un premier ensemble de coupe (20) monté sur le bras mobile (18), un chariot (25) monté mobile sur la tourelle (10) dans la direction verticale, un second ensemble de coupe vertical monté sur le chariot (25) et un moyen de manutention (30) de fragments du composant (3).

FIG.1

EP 0 498 691 A1

L'invention concerne un dispositif de découpage d'un composant irradié d'un réacteur nucléaire ayant une paroi de forme générale tubulaire, disposé avec son axe vertical dans une partie de la structure du réacteur nucléaire. En particulier, l'invention concerne un dispositif permettant le découpage de la paroi d'une cuve d'un réacteur nucléaire refroidi par de l'eau.

Les réacteurs nucléaires refroidis à l'eau comportent une cuve qui est destinée à contenir le coeur du réacteur nucléaire et qui est raccordée au circuit de refroidissement du réacteur dans lequel circule l'eau de refroidissement.

La paroi de la cuve du réacteur qui est en contact avec le fluide de refroidissement et exposée aux rayonnements émis par le coeur du réacteur est activée et contaminée, après un certain temps de fonctionnement du réacteur.

Dans le cas des centrales nucléaires parvenues en fin de vie et qui nécessitent un arrêt complet, jusqu'ici, la solution retenue a été de laisser ces centrales dans l'état où elles se trouvaient et de laisser décroître l'activité des matériaux constitutifs de leurs composants, afin de les démonter ultérieurement, dans des conditions plus satisfaisantes qu'au moment de l'arrêt, sans avoir à utiliser des outillages complexes commandés à distance.

Dans l'avenir, le nombre de centrales qui seront mises hors d'exploitation industrielle augmentera sensiblement, si bien qu'il est nécessaire d'envisager un démantèlement de ces centrales, afin de restaurer dans son état d'origine le site où elles sont implantées.

Le démantèlement de la partie classique de la centrale ne pose pas de problème particulier mais en revanche, le démantèlement de la partie de la centrale constituant le réacteur nucléaire proprement dit pose des problèmes difficiles à résoudre, du fait des émissions radio-actives des matériaux constitutifs des composants du réacteur.

En particulier, la cuve des réacteurs nucléaires refroidis par de l'eau qui contient les assemblages combustibles et qui est en contact avec l'eau de refroidissement du réacteur pendant son fonctionnement est activée et contaminée, dans le cas des réacteurs parvenus en fin de vie.

La cuve des réacteurs nucléaires refroidis à l'eau se présente sous la forme d'un corps de forme générale tubulaire fermé par des fonds bombés, de grandes dimensions et ayant une forte épaisseur de paroi.

La cuve qui présente une masse très élevée est disposée à l'intérieur d'un puits de cuve ménagé dans une structure en béton qui délimite également une ou plusieurs piscines situées au-dessus du niveau supérieur de la cuve.

On a proposé, dans la demande de brevet n° 9008117 déposée le 27 juin 1990 par la Société FRAMATOME, un procédé de démantèlement d'un composant irradié d'un réacteur nucléaire tel qu'une cuve, par découpage de sa paroi.

Pour la mise en oeuvre de ce procédé, on supprime les éléments de liaison entre la structure en béton du réacteur et le composant à démanteler, on déplace le composant d'une certaine distance dans la direction verticale, suivant son axe à l'intérieur du puits et par étapes successives et on réalise le découpage de la paroi du composant sur une hauteur correspondant sensiblement à la distance verticale de déplacement. On obtient ainsi des blocs de matériaux irradiés de la paroi au niveau supérieur du puits dans lequel est placé le composant et on évacue les blocs découpés pour réaliser leur élimination ou leur stockage.

Le déplacement du composant dans la direction verticale peut être obtenu grâce à un mât de levage disposé suivant l'axe du composant et relié à sa partie inférieure.

Des ensembles de coupe de la paroi du composant comportant une scie à ruban ou une scie circulaire peuvent être fixés sur le mât de levage ou sur un support reposant sur la structure du réacteur.

On a également proposé, dans la demande de brevet 90-13816 déposée par la Société FRAMATOME, un procédé de démantèlement d'un composant irradié d'un réacteur nucléaire dans lequel on réalise le soulèvement progressif du composant, de manière à réaliser son découpage par étapes successives, grâce à des moyens de levage disposés endessous du composant et exerçant une poussée sur la partie inférieure de ce composant.

Le découpage de blocs de matériaux dans la paroi du composant nécessite la mise en oeuvre d'ensembles de coupe supportés par la structure du réacteur et disposés dans une zone telle que la partie supérieure du puits de cuve dans laquelle on vient présenter la partie supérieure du composant à découper.

Quel que soit le procédé de déplacement dans la direction verticale du composant, la mise en place et la fixation des ensembles de coupe à l'intérieur de la structure du réacteur nécessitent des opérations qui peuvent être longues et difficiles à réaliser.

On ne connaissait pas jusqu'ici de dispositif de découpage d'un composant d'un réacteur nucléaire, tel qu'une cuve, qui soit autonome et qui puisse être mis en position de service, de façon simple et rapide.

Le but de l'invention est donc de proposer un dispositif de découpage d'un composant d'un réacteur nucléaire ayant une paroi de forme générale tubulaire disposé avec son axe vertical dans une partie de la structure du réacteur nucléaire dont on effectue le démantèlement qui puisse être mis en place de manière totalement autonome, par des opérations simples et rapides, quel que soit le procédé de déplacement vertical du composant pour effectuer son découpage.

Dans ce but, le dispositif suivant l'invention comporte :

– un support muni de moyens pour sa fixation démontable sur la structure du réacteur, au-dessus et à la verticale du composant,

– une tourelle ayant une disposition verticale reposant sur le support par l'intermédiaire de sa partie supérieure et montée rotative sur le support autour de son axe vertical,

– un dispositif de reprise d'efforts sur lequel l'extrémité inférieure de la tourelle est montée rotative,

– un bras monté mobile sur la tourelle dans une direction radiale,

– un premier ensemble de coupe comportant une scie circulaire à disposition horizontale montée sur le bras mobile,

– un chariot monté mobile sur la tourelle dans la direction verticale,

– un second ensemble de coupe comportant une scie circulaire à disposition verticale montée sur le chariot, et

– un moyen de manutention de fragments du composant obtenus par découpage de la paroi comportant un treuil fixé sur la tourelle ayant un câble de levage à l'extrémité duquel est suspendu un moyen de préhension de fragments du composant.

Afin de bien faire comprendre l'invention, on va maintenant décrire, à titre d'exemple non limitatif, en se référant aux figures jointes en annexe, un dispositif suivant l'invention utilisé pour le découpage d'une cuve d'un réacteur nucléaire refroidi à l'eau.

La figure 1 est une vue en élévation avec coupe partielle d'un dispositif suivant l'invention, en position de service dans la structure d'un réacteur nucléaire, pour réaliser le découpage de la cuve du réacteur.

La figure 2 est une vue de dessus du dispositif représenté sur la figure 1.

La figure 3 est une vue en élévation et en coupe partielle de la partie inférieure du dispositif, lors du découpage du fond de la cuve.

La figure 4 est une vue en perspective montrant la réalisation du découpage du fond de la cuve en utilisant le dispositif suivant l'invention.

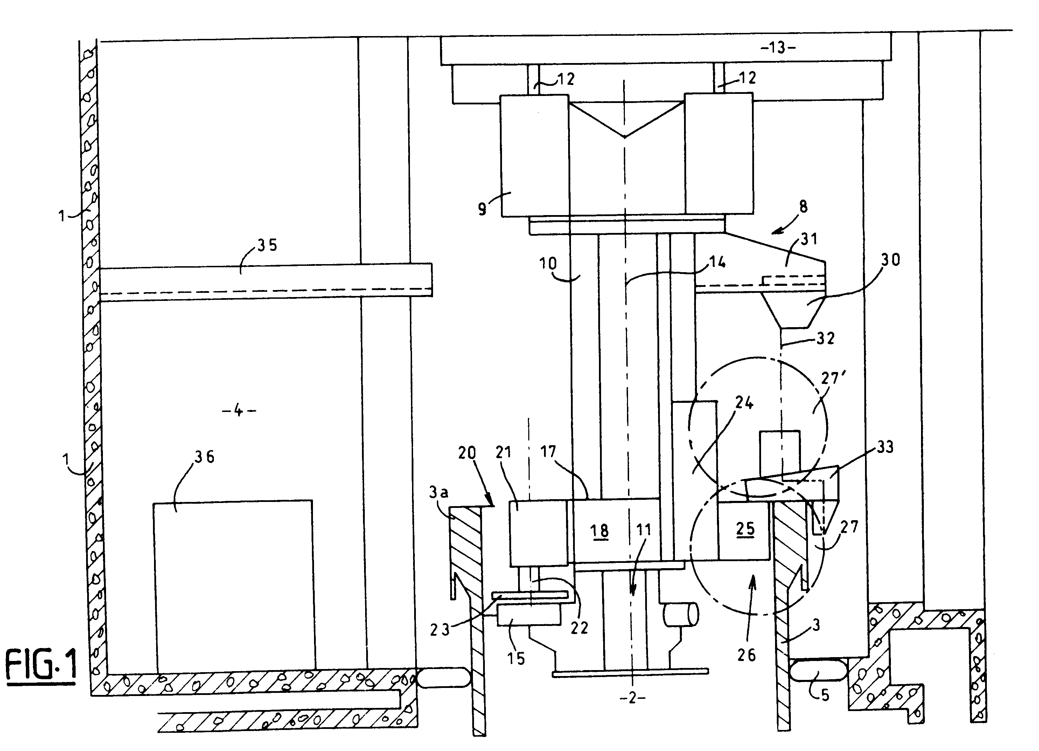

Sur la figure 1, on voit la structure en béton 1 d'un réacteur nucléaire délimitant un puits de cuve 2 à l'intérieur duquel est disposée la cuve 3 du réacteur.

La cuve 3 comporte une paroi tubulaire dont la partie supérieure 3a à forte épaisseur est destinée à recevoir le couvercle de fermeture de la cuve.

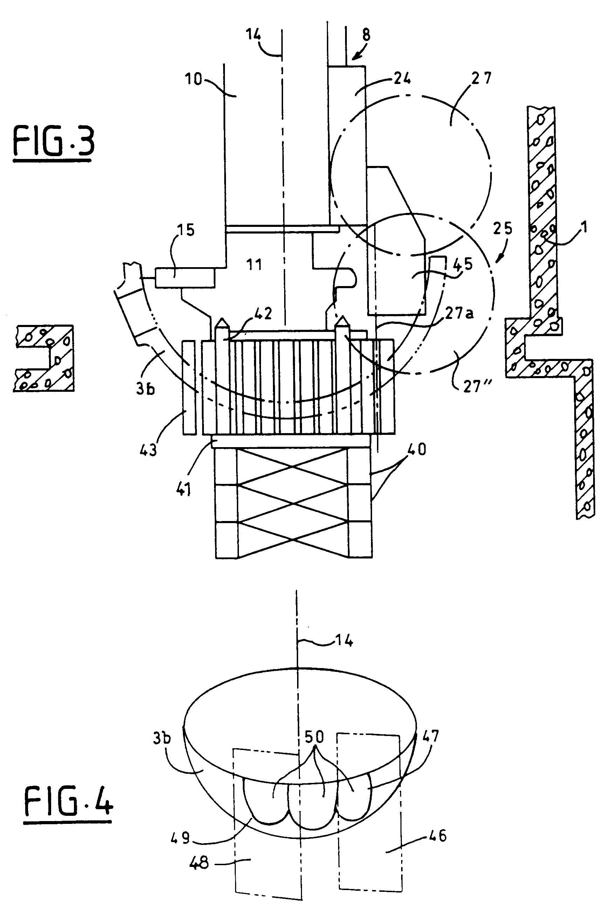

La partie inférieure de la cuve 3 non représentée sur la figure 1 est constituée par un fond 3b de forme hémisphérique visible sur la figure 3.

Le démantèlement du réacteur nucléaire qui comporte en particulier les opérations de découpage de la cuve 3 et d'élimination des fragments obtenus par découpage est réalisé, après l'arrêt définitif et le refroidissement du réacteur, à l'intérieur de la structure 1, les assemblages du coeur et les structures internes du réacteur ayant été préalablement enlevés de la cuve 3.

Le découpage est réalisé dans une zone située au-dessus du puits de cuve 2, au niveau de la piscine 4 du réacteur.

Pendant le découpage de la cuve 3, le puits de cuve 2 est isolé de la piscine 4, autour de la cuve 3, par un dispositif de fermeture étanche 5.

La cuve 3 est déplacée par étapes successives dans la direction verticale, de manière que sa partie supérieure sur laquelle on réalise le découpage soit disposée au-dessus du fond de la piscine 4.

Le dispositif de découpage suivant l'invention, désigné de manière générale par le repère 8, comporte un support rigide 9, une tourelle 10 suspendue, par l'intermédiaire de sa partie supérieure, au support 9 et un dispositif de reprise d'efforts 11 dans lequel est engagée la partie inférieure de la tourelle 10.

Le support rigide 9 comporte des moyens 12 de fixation amovibles sur la structure 1 du réacteur, au-dessus et à la verticale du puits de cuve 2, par exemple au niveau de la dalle de protection biologique 13 du réacteur.

La tourelle 10 de forme allongée et ayant une disposition verticale est montée mobile en rotation autour de son axe vertical 14 sur le support 9.

Lorsque le dispositif 8 est dans sa position de service, comme représenté sur la figure 1, l'axe 14 de la tourelle 10 est placé suivant l'axe de symétrie vertical du puits de cuve 2 et de la cuve 3.

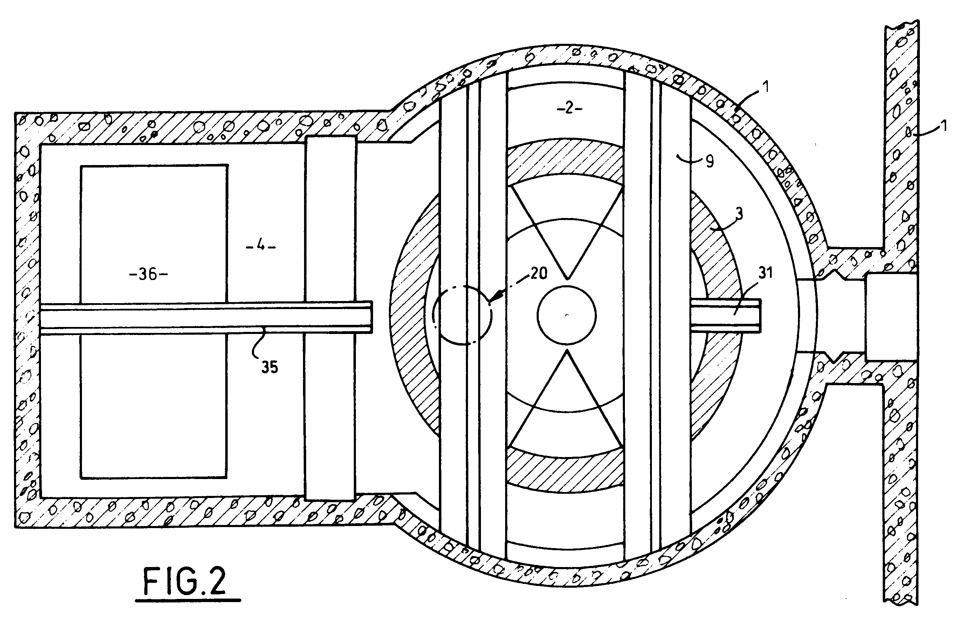

La disposition du support 9 à l'aplomb de la cuve 3 est représentée sur la figure 2.

La partie inférieure de la colonne 10 engagée dans le dispositif de reprise d'efforts 11 est montée rotative autour de son axe 14, par rapport au dispositif 11, sur lequel sont fixés des vérins de rigidification tels que le vérin 15, dans une direction radiale par rapport à l'axe 14.

Trois vérins 15 disposés à 120 ° les uns des autres autour de l'axe 14 sont susceptibles de venir en appui par l'extrémité de leur tige extensible, avec la surface intérieure de la cuve 3. On obtient ainsi un centrage et un maintien en position de la partie inférieure de la tourelle 10 assurant la rigidification du dispositif de découpage 8 dont la partie inférieure est engagée dans la partie supérieure de la cuve 3 en position de découpage.

La tourelle 10 porte, à son extrémité inférieure, une glissière horizontale 17 de direction radiale, c'est-à-dire perpendiculaire à l'axe 14 de la tourelle, par l'intermédiaire de laquelle un bras 18 mobile dans la direction radiale est monté sur la tourelle 10.

Un ensemble de coupe 20 est fixé à l'extrémité du bras mobile 18. L'ensemble de coupe 20 comporte un moteur d'entraînement 21 dont l'arbre de sortie rotatif 22 porte une lame de scie circulaire 23 de forme plane ayant une disposition horizontale.

La tourelle 10 comporte également dans sa partie inférieure, une glissière verticale 24 sur laquelle est monté glissant dans la direction verticale, le chariot 25 d'un ensemble de coupe vertical.

L'ensemble de coupe 26 comporte un moteur d'entraînement dont l'arbre de sortie rotatif porte une lame de scie circulaire 27 de forme plane ayant une disposition verticale.

Il est à remarquer que le premier ensemble de coupe 20 et le second ensemble de coupe vertical 26 sont identiques et sont donc interchangeables.

Sur la figure 1, la lame de scie circulaire verticale 27 a été représentée dans deux positions extrêmes 27 et 27' correspondant respectivement à la position basse et à la position haute du chariot 25 de l'ensemble de coupe monté mobile sur la glissière 24.

Des dispositifs moteurs non représentés sont associés à la tourelle 10, au bras mobile 18 et au chariot 25 de l'ensemble de coupe vertical 26, pour permettre leur déplacement en rotation autour de l'axe 14, en translation dans la direction radiale et en translation dans la direction verticale, respectivement.

Le dispositif de découpage 8 comporte également un treuil de levage 30 associé à un monorail 31 solidaire de la tourelle 10 à sa partie supérieure et placé dans une disposition radiale par rapport à la tourelle 10.

Le treuil 30 associé au monorail 31, disposé à l'aplomb et au-dessus de la paroi de la cuve 3, comporte un câble de levage 32 à l'extrémité duquel est fixée une pince de préhension 33 comportant des mâchoires susceptibles de venir en prise avec la partie supérieure de la paroi de la cuve 3, au niveau d'un fragment de cette paroi dont on a réalisé préalablement le découpage en utilisant les ensembles de coupe.

Par rotation de la tourelle 10 de 180° autour de son axe, le monorail 31 peut venir se placer dans le prolongement d'un monorail d'évacuation 35 et se raccorder à ce monorail 35 qui est disposé à l'intérieur de la piscine 4 du réacteur, dans une direction radiale par rapport au puits de cuve 2, de manière à assurer le transfert des fragments de la cuve 3 qui ont été réalisés par découpage de sa paroi, dans un conteneur situé dans une zone de stockage 36 à l'intérieur de la piscine 4 du réacteur.

Le découpage de la cuve 3 en utilisant le dispositif 8 suivant l'invention est réalisé de la manière qui sera décrite ci-dessous.

La cuve 3 est placée dans une position verticale telle que sa partie supérieure qui se trouve à un niveau supérieur au niveau du fond de la piscine, entoure la partie inférieure du dispositif de découpage 8 comportant le dispositif de reprise d'efforts 11 et les ensembles de coupe.

Le dispositif de reprise d'efforts 11 est bridé à l'intérieur de la cuve 3, par appui des tiges des vérins 15 contre la surface intérieure de la cuve 3.

La tourelle 10 du dispositif 8 se trouve alors fixée de manière rigide à l'intérieur de la cuve 3, dans une disposition coaxiale par rapport à la paroi de la cuve.

On commande alors le déplacement dans la direction radiale du bras 18 et la mise en rotation de l'arbre 22 de l'ensemble de coupe 20, de manière à réaliser le découpage de la paroi de la cuve 3, sur toute son épaisseur, suivant une ligne de coupe horizontale.

L'amplitude de déplacement du bras 18 et de l'ensemble de coupe 20 permet de réaliser une avance de la lame de scie circulaire 23 assurant un découpage de la paroi de la cuve sur toute son épaisseur.

La tourelle 10 est mise en rotation autour de son axe 14, de manière à réaliser une coupe horizontale de la paroi de la cuve d'une certaine amplitude angulaire.

On effectue ensuite le retrait de l'ensemble de coupe 20 par déplacement du bras 18 en direction de l'axe 14 de la tourelle.

La tourelle 10 est mise en rotation autour de son axe 14, de manière à placer l'ensemble de coupe vertical 26 dont la lame de scie circulaire 27 est dans sa position haute 27', dans une position voulue au-dessus du bord supérieur de la cuve 3, dans la zone où l'on a réalisé précédemment la coupe horizontale.

La lame de scie circulaire 27 de l'ensemble de coupe est mise en rotation et le chariot 25 de l'ensemble de coupe guidé par la glissière 24 est déplacé dans la direction verticale et vers le bas, de manière que la lame de scie circulaire se déplace entre sa position haute 27' et sa position basse 27.

Lorsque la lame de scie circulaire est parvenue dans sa position basse 27, la portion de couronne de la paroi de la cuve 3 réalisée par découpe horizontale se trouve découpée sur toute sa hauteur dans la direction verticale.

La lame de scie circulaire verticale est alors replacée dans sa position haute 27' et la tourelle 10 est mise en rotation pour effectuer un déplacement angulaire d'amplitude déterminée, de manière à placer la lame de scie circulaire verticale dans une nouvelle position de coupe de la portion de couronne de la paroi de la cuve 3.

Par mise en rotation de la lame de scie circulaire verticale 27 et par déplacement dans la direction verticale et vers le bas du chariot 25 de l'ensemble de coupe, on peut alors réaliser une nouvelle coupe de la portion de couronne, suivant toute sa hauteur, de manière à détacher un fragment de la paroi de la cuve 3 délimités par une coupe horizontale et deux coupes verticales.

Avant de réaliser la seconde découpe verticale de la paroi de la cuve, on vient mettre en prise sur la paroi, au niveau du fragment dont on réalise le découpage, la pince de préhension 33 du treuil de levage 30 dont la position suivant la périphérie de la tourelle 10 est voisine de la position de l'ensemble de coupe vertical 25.

Lorsque la seconde découpe verticale a été réalisée, le fragment est entièrement détaché de la paroi de la cuve, si bien qu'on peut réaliser son levage au-dessus de la partie supérieure de la cuve en utilisant le treuil 30.

La lame de scie circulaire de l'ensemble de coupe vertical est replacée dans sa position haute 27'.

Pendant les opérations de découpage, les copeaux produits sont projetés à l'intérieur de la cuve.

Par mise en rotation de la tourelle 10, on vient placer le monorail 31 du treuil 30 dans le prolongement du monorail 35.

Le fragment de la paroi de la cuve 3 qui a été découpé est pris en charge par la pince 33 suspendue au chariot du monorail 31, transféré au monorail 35 puis déposé à l'intérieur d'un conteneur dans la zone de stockage 36.

On peut alors effectuer, comme décrit précédemment, la découpe et l'évacuation d'un nouveau fragment de la cuve, au niveau de la zone dans laquelle a été réalisée la découpe horizontale.

Après avoir effectué le découpage et l'évacuation par fragments de l'ensemble de la portion de couronne réalisée par découpe horizontale, on effectue une nouvelle coupe horizontale en utilisant l'ensemble de coupe 20. La nouvelle portion de couronne de la paroi de la cuve 3 est recoupée et évacuée comme décrit précédemment.

On peut ainsi effectuer le découpage et l'évacuation par fragments d'une couronne complète correspondant à un tronçon de la cuve 3.

Le premier tronçon de la cuve dont on réalise le découpage et l'évacuation est constitué par sa partie supérieure élargie 3a.

A l'issue de chacune des opérations de découpage et d'évacuation d'un tronçon de la cuve, on place les tiges des vérins 15 du dispositif de reprise d'efforts 11 dans leur position rétractée, de manière à pouvoir réaliser le déplacement vertical et vers le haut de la cuve 3, sur une longueur correspondant sensiblement à la hauteur du tronçon précédemment découpé.

On peut alors effectuer une nouvelle opération de découpage et d'évacuation d'un tronçon de la cuve ayant la forme d'une couronne.

De préférence, le levage de la cuve 3 par étapes successives sera réalisé en utilisant un procédé et un dispositif tels que décrits dans la demande de brevet 90-13816 déposée par la Société FRAMATOME.

Comme représenté sur la figure 3, le dispositif de levage utilisé comporte des éléments de support modulaires 40 qui sont destinés à être empilés les uns sur les autres et intercalés entre le fond de la cuve 3b et une surface de support de la structure du réacteur.

La hauteur d'un élément modulaire 40 correspond à la hauteur de soulèvement de la cuve 3, entre deux opérations successives de découpage d'un tronçon annulaire.

Le fond de cuve 3b repose sur l'élément modulaire 40 situé au sommet de la pile, par l'intermédiaire d'une plaque de support 41 fixée sous le fond de cuve 3b, par l'intermédiaire de tiges 42 engagées dans des tubes 43 traversant le fond de cuve 3b.

Suivant le type de cuve de réacteur dont on réalise le découpage, les tubes 43 traversant le fond de cuve 3b peuvent être constitués par des tubes-guides d'instrumentation ou par des tubes-guides de barres de commande du réacteur.

Sur la figure 3, on a représenté la partie inférieure du dispositif de découpage 8 suivant l'invention, dans la phase finale du découpage consistant à découper le fond de cuve 3b.

Dans cette phase finale, la mise en appui des tiges des vérins 15 du dispositif de reprise d'efforts 11 contre la paroi intérieure de la cuve, au niveau du fond hémisphérique 3b ne permet plus d'assurer une liaison efficace entre le dispositif de découpage 8 et la partie restante de la paroi de la cuve.

Les tiges 42 solidaires de la plaque 41 de support et de soulèvement de la cuve sont alors reliées au dispositif de reprise d'efforts 11 par leur partie supérieure, de manière à assurer une liaison mécanique efficace entre la partie inférieure du dispositif de découpage 8 et le fond de cuve 3b à découper.

De manière à pouvoir effectuer le découpage du fond de cuve, l'ensemble de coupe vertical et les moyens de guidage dans la direction verticale de cet ensemble de coupe peuvent être adaptés.

La glissière 24 est prolongée vers le bas par un adaptateur prolongateur 45 permettant un déplacement vers le bas de la lame de coupe circulaire au-delà de sa position basse 27 et jusqu'à une position 27'' représentée sur la figure 3.

En outre, la lame de coupe circulaire 27 peut être placée dans une position verticale 27a dans laquelle le plan de la lame est perpendiculaire au plan vertical de déplacement de la lame 27 entre ses positions successives 27, 27' et 27''. D'autre part, l'axe de la lame 27 dans sa position 27a a une direction radiale et se trouve donc concourant avec l'axe 14 de la tourelle 10. La distance entre l'axe 14 de la tourelle et le plan de la lame 27 dans sa position 27a est sensiblement inférieure au rayon du fond hémisphérique 3b.

Comme il est visible sur la figure 4, le découpage du fond hémisphérique 3b de la cuve 3 est effectué en réalisant des découpes verticales dans des plans radiaux tels que le plan 46 en déplaçant la lame circulaire de coupe entre ses positions 27 et 27'' représentées sur la figure 3, l'ensemble de coupe vertical étant guidé par les glissières 24 et 45, lors de son déplacement dans la direction verticale et vers le bas.

On réalise différentes découpes successives 47 dans des plans radiaux tels que 46, en faisant tourner la tourelle 10 d'un certain angle autour de son axe 14, entre deux opérations de découpage utilisant la lame 27 se déplaçant entre ses positions 27 et 27".

On place ensuite la lame 27 dans sa position 27a de manière à réaliser un découpage du fond de cuve 3b, dans un plan tel que 48 perpendiculaire à un plan radial et parallèle à l'axe 14 de la cuve.

La lame 27 est placée successivement, par orientation de la tourelle 10, dans des positions permettant le découpage des sections du fond de cuve comprises entre deux découpes verticales et radiales 47. On réalise ainsi des découpes 49 sur le fond de cuve situées chacune dans un plan 48 et permettant de détacher un fragment 50 du fond de cuve en forme de pétale. Chacun des fragments 50 est évacué en utilisant le treuil 30 et le monorail 35.

On réalise ainsi le découpage et l'évacuation de fragments successifs du fond de la cuve.

La partie restante du fond de la cuve est constituée par un élément en forme de calotte sphérique délimité par une ligne de coupe crénelée, cette partie restante étant évacuée dans son ensemble.

On a ainsi réalisé le découpage de l'ensemble de la cuve du réacteur en cours de démantèlement en utilisant un seul dispositif de découpage dont la mise en place à l'intérieur de la structure du réacteur nucléaire est réalisée une fois pour toutes au début de l'opération de découpage.

L'invention ne se limite pas au mode de réalisation qui a été décrit.

C'est ainsi qu'on peut utiliser un dispositif de découpage comportant un support de forme quelconque permettant sa fixation sur une partie de la structure du réacteur nucléaire différente de la dalle de protection biologique.

La tourelle du dispositif et les moyens de guidage des ensembles de coupe peuvent être différents de ceux qui ont été décrits.

Le dispositif de reprise d'efforts et le treuil de manutention des fragments de la cuve peuvent être réalisés sous des formes différentes de celles qui ont été décrites.

Enfin, le dispositif de découpage suivant l'invention peut être utilisé pour réaliser le démantèlement de tout composant d'un réacteur nucléaire présentant une forme générale tubulaire et qui est disposé avec son axe vertical dans une partie de la structure du réacteur nucléaire.

## Revendications

1. Dispositif de découpage d'un composant (3) d'un réacteur nucléaire ayant une paroi de forme générale tubulaire disposé avec son axe vertical dans une partie de la structure (1) du réacteur nucléaire dont on effectue le démantèlement, caractérisé par le fait qu'il comporte :
   – un support (9) muni de moyens (12) pour sa fixation démontable sur la structure (1) du réacteur au-dessus et à la verticale du composant (3),
   – une tourelle (10) ayant une disposition verticale reposant sur le support (9) par l'intermédiaire de sa partie supérieure et montée rotative sur le support (9) autour de son axe vertical (14),
   – un dispositif de reprise d'efforts (11) sur lequel l'extrémité inférieure de la tourelle (10) est montée rotative,
   – un bras (18) monté mobile sur la tourelle (10) dans une direction radiale,
   – un premier ensemble de coupe (20) comportant une scie circulaire à disposition horizontale montée sur le bras mobile (18),
   – un chariot (25) monté mobile sur la tourelle dans la direction verticale,
   – un second ensemble de coupe (26) comportant une scie circulaire (27) à disposition verticale montée sur le chariot (25) et un moyen de manutention (30) de fragments du composant (3) obtenus par découpage de la paroi comportant un treuil (30) fixé sur la tourelle (10) ayant un câble de levage (32) à l'extrémité duquel est suspendu un moyen de préhension (33) de fragments du composant (3).

2. Dispositif suivant la revendication 1, caractérisé par le fait que le support (9) est fixé sur la structure (1) du réacteur à l'emplacement de la dalle de protection biologique (13) du réacteur.

3. Dispositif suivant l'une quelconque des revendications 1 et 2, caractérisé par le fait que le premier ensemble de coupe (20) et le second ensemble de coupe (26) sont identiques et interchangeables.

4. Dispositif suivant l'une quelconque des revendications 1 à 3, caractérisé par le fait que le dispositif de reprise d'efforts (11) comporte des vérins de rigidification (15) disposés dans la direction radiale et dont la tige est destinée à venir en appui contre la surface intérieure du composant (3), pour assurer la rigidification du dispositif de découpage (8).

5. Dispositif suivant l'une quelconque des revendications 1 à 4, caractérisé par le fait que le dispositif de reprise d'efforts (11) comporte des moyens de liaison (41-42) à la partie inférieure (3b) du composant (3) constituée par un fond bombé, de manière à réaliser le découpage du fond bombé (3b) du composant (3), après le découpage de la paroi tubulaire cylindrique de ce composant.

6.  Dispositif suivant l'une quelconque des revendications 1 à 5, caractérisé par le fait que la scie circulaire à disposition verticale (27) du second ensemble de coupe (26) est montée sur cet ensemble de coupe de manière à pouvoir être placée soit dans une première position où la scie circulaire (27) plane est dans un plan radial passant par l'axe (14) de la tourelle (10), soit dans une seconde position où la scie circulaire plane est perpendiculaire à un plan radial et parallèle à l'axe (14) de la tourelle (10) de façon à découper des portions (50) du fond (3b).

FIG.1

FIG.2

EP 0 498 691 A1

FIG·3

FIG·4

Office européen
des brevets

**RAPPORT DE RECHERCHE EUROPEENNE**

Numero de la demande

EP  92 40 0193

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 813 313 (KOBE SEIKO)<br>* revendications 1,2,8; figure 1 *<br>--- | 1-6 | G21F9/30 |
| A | DE-A-2 554 256 (STEINMULLER)<br>* revendications 1,2 *<br>--- | 1-6 | |
| A | PATENT ABSTRACTS OF JAPAN<br>vol. 13, no. 475 (P-950)(3823) 27 Octobre 1989<br>& JP-A-1 187 499 ( SCIENCE & TECH. AGENCY ) 26 Juillet 1989<br>* le document en entier *<br><br>----- | 1-6 | |
| | | | **DOMAINES TECHNIQUES RECHERCHES (Int. Cl.5)**<br><br>G21F |

Le présent rapport a été établi pour toutes les revendications

| Lieu de la recherche | Date d'achèvement de la recherche | Examinateur |
|---|---|---|
| LA HAYE | 27 FEVRIER 1992 | NICOLAS H.J.F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

11